# EUROPÄISCHE PATENTANMELDUNG

(11) **EP 1 046 572 A2**
(43) Veröffentlichungstag der Anmeldung: **25.10.2000**
(21) Anmeldenummer: 00108035.7
(22) Anmeldetag: 20.04.2000
(51) Int. Cl.: B62D 15/02, B62D 1/04

(54) **Lenkvorrichtung für ein Kraftfahrzeug**

(30) Priorität: 22.04.1999 DE 29907180 U
(71) Anmelder: TRW Automotive Safety Systems GmbH & Co. KG, 63743 Aschaffenburg (DE)
(72) Erfinder: Lehmann, Michael, 63739 Aschaffenburg (DE); Steinmüller, Albert, 63825 Westerngrund (DE); Limberg, Klaus, 75175 Pforzheim (DE); Zink, Tino, 75245 Neulingen (DE); Schneider, Frank, 75173 Pforzheim (DE)
(74) Vertreter: Kitzhofer, Thomas, Dipl.-Ing.

(57) **Zusammenfassung**

Die Erfindung betrifft eine Vorrichtung zur Erzeugung eines Lenksignals zur Ansteuerung eines Stellantriebs für die Einstellung lenkbarer Räder an Kraftfahrzeugen, insbesondere Personenkraftfahrzeugen. Die Vorrichtung ist gekennzeichnet durch
- ein nicht drehbares Gestell (1), das eine Symmetrieachse (2) und bogenförmige Führungsabschnitte aufweist,
- ein Paar miteinander gekoppelter Handgriffe (3a, 3b), die an den Führungsabschnitten verschiebbar gleichsinnig gelagert sind und sich längs der Führungsabschnitte und relativ zur Symmetrieachse um ein begrenztes Maß verschieben lassen,
- sowie einen Meßwertgeber (4) zur Generierung eines elektrischen oder elektronischen Signals zur Bestimmung der Lage der Handgriffe (3a, 3b) relativ zum Gestell (1).

## Beschreibung

Die Erfindung betrifft eine Vorrichtung zur Erzeugung eines Lenksignals für die Ansteuerung eines Stellantriebs für die Einstellung lenkbarer Räder an Kraftfahrzeugen, insbesondere an Personenkraftfahrzeugen.

Aus Sicherheits- und Komfortgründen ist man seit einiger Zeit bestrebt, außer der Betätigung für den Hupkontakt immer mehr Einrichtungen zur Betätigung der verschiedensten Fahrzeugfunktionen (Lichtschalter, Scheibenwischer, Fensterheber, Radio, Heizung, Telefon) unmittelbar im Lenkrad anzuordnen, damit der Fahrer nicht mehr gezwungen ist, zur Einschaltung derartiger Funktionen eine Hand vom Lenkrad zu nehmen. Es leuchtet unmittelbar ein, daß die Übertragung von an einem drehbaren Lenkrad erzeugten elektrischen Signalen auf die in der Kraftfahrzeugkarosserie ortsfest angeordneten Stellglieder nicht unproblematisch ist, insbesondere dann, wenn eine Vielzahl unterschiedlicher Signale übertragen werden muß. Es wurden daher schon feststehende oder im Wesentlichen feststehende Lenkvorrichtungen vorgeschlagen, bei denen die mechanische Kopplung zwischen Lenkvorrichtung und Lenkgestänge durch einen Meßwertgeber an der Lenkvorrichtung und einen Stellantrieb am Lenkgestänge ersetzt worden ist. Bei derartigen Lenkvorrichtungen kann man auf die üblichen maximalen 2 ½ bis 4 Umdrehungen zur Erzielung des maximalen Radeinschlags verzichten und den eigentlichen Stellweg für die Betätigung der lenkbaren Räder auf einen Drehwinkel von 30 Grad oder weniger beschränken. Dadurch wird die Übertragung einer Vielzahl von Signalen unproblematisch, weil die Betätigungseinrichtungen entweder an Teilen der Lenkvorrichtung angeordnet sind, die relativ zur Karosserie feststehend ausgebildet sind oder aber an Teilen der Lenkvorrichtung angeordnet sind, die nur um einen kleinen Drehwinkel relativ zur Karosserie bewegbar sind, so daß man mit einfachen Leitungsschlingen auskommt, um eine elektrische Verbindung zwischen drehenden und feststehenden Teilen herstellen zu können.

Eine mechanische Entkopplung und eine elektrische Übertragung des Lenkbefehls an die lenkbaren Räder ist auch dann erforderlich, wenn man über moderne Sicherheitssysteme eine Fahrer unabhängige Fahrzeugstabilisierung erreichen und dabei auch auf den Einstellwinkel der lenkbaren Räder Einfluß nehmen will.

Die Entwicklung derartiger Lenkvorrichtungen steckt noch in den Anfängen und die bisher gemachten Vorschläge genügen noch nicht allen Ansprüchen. Die Erfindung schafft eine einfach aufgebaute Lenkvorrichtung, die für den Fahrer eine geringe Umgewöhnung gegenüber herkömmlichen Lenkrädern abverlangt. Die Vorrichtung der eingangs genannten Art ist gekennzeichnet durch
- ein nicht drehbares Gestell, das eine Symmetrie- oder eine Mittelachse und bogenförmige Führungsabschnitte aufweist,
- ein Paar miteinander gekoppelter Handgriffe, die an den Führungsabschnitten gleichsinnig verschiebbar gelagert sind und sich längs der Führungsabschnitte und relativ zur Symmetrieachse um ein begrenztes Maß verschieben lassen,
- sowie einen Meßwertgeber zur Generierung eines elektrischen oder elektronischen Signals zur Bestimmung der Lage der Handgriffe relativ zum Gestell.

Die vorgeschlagene Lenkvorrichtung hat den Vorteil, daß sie ohne weiteres an die Stelle herkömmlicher Lenkräder treten kann, ohne daß der Fahrer eine völlig andere Lenk- und Sitzhaltung einnehmen muß. Die Lenkbefehle werden auch durch eine gewohnte Bewegung der miteinander gekoppelten Handgriffe eingeleitet, wobei wegen des vergleichsweisen kurzen Stellweges kein Umgreifen wie bei herkömmlichen Lenkrädern erforderlich ist, was hinsichtlich Sicherheit und Komfort als vorteilhaft anzusehen ist.

Vorteilhafte Abwandlungen und Weiterbildungen des Erfindungsgedanken sind in den Unteransprüchen beschrieben. Weitere Einzelheiten werden anhand der in den Figuren 1 bis 4 dargestellten Ausführungsbeispielen näher erläutert. Es zeigen:
- Figur 1: eine erste Ausführungsform der erfindungsgemäßen Lenkvorrichtung in der Draufsicht.
- Figuren 2a, 2b: eine zweite Ausführungsform des Erfindungsgedanken, teils in der Draufsicht (Fig. 2a) teils im Schnitt (Fig. 2b).
- Figuren 3a bis 3c: Einzelheiten der Ausführungsform gemäß Figur 1.
- Figuren 4a bis 4d: Einzelheiten weiterer Ausführungsformen des Erfindungsgedankens.

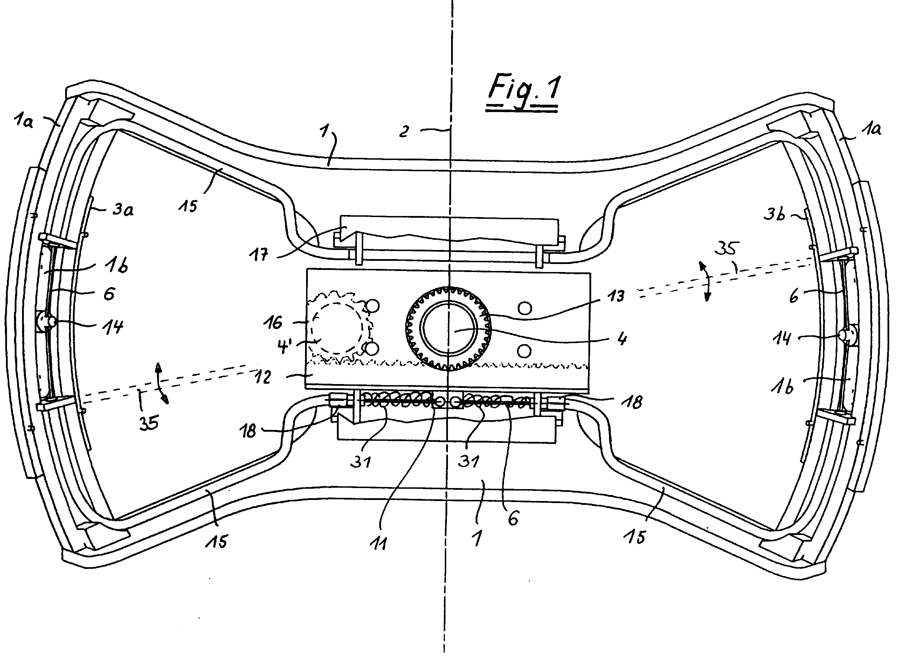

Die in Figur 1 dargestellte Ausführungsform des Erfindungsgedankens umfaßt ein Gestell 1 mit bogenförmigen Führungsabschnitten in Form von Führungsleisten 1a auf denen und längs derer ein Paar miteinander gekoppelter, ebenfalls bogenförmiger Handgriffe 3a, 3b um ein begrenztes Maß gleichsinnig zu Symmetrieachse 2 verschiebbar gelagert sind. Im dargestellten Ausführungsbeispiel sind die Führungsleisten 1a in Form von Kreisabschnitten ausgebildet, so daß die Handgriffe 3a, 3b eine Kreisbewegung um einen Punkt der Symmetrieachse 2, die auch eine Mittelachse sein kann, ausführen können. Diese Kreisbewegung entspricht der üblichen Handführung bei einem drehbaren Lenkrad, so daß die Betätigung der lenkbaren Räder für den Fahrer keiner Umgewöhnung bedarf. Die Handgriffe 3a, 3b bestehen jeweils aus einer Unter- und einer Oberschale, wobei in Figur 1 lediglich die Unterschale dargestellt ist. In den Führungsleisten 1a sind kreisbogenförmige Schlitze 1b ausgebildet, in die ein mit den Handgriffen 3a, 3b fest verbundenes Übertragungselement 14 eingreift. Dieses Übertragungselement 14 ist mit einem Seil 6 verbunden, das in einer Seilführung 15 wie bei einem bekannten Bowdenzug im Gestell 1 geführt ist. Auf diese Weise sind beide Handgriffe 3a, 3b miteinander mechanisch gekoppelt, und sie können daher zwangsweise nur gleichsinnig betätigt werden. Zur Spannung des Seils können Schraubelemente 18 oder nicht gezeigte vorgespannte Elemente verwendet werden, wie sie bei den bekannten Bowdenzügen üblich sind.

Die Enden des Seils 6 sind mit einem Übertragungselement 11 verbunden, das seinerseits an einer Zahnstange 12 befestigt ist, die in ein Zahnrad 13 eingreift, das mit einem Meßwertgeber 4 zur Generierung eines elektrischen oder elektronischen Signals zusammenwirkt. Die zuletzt genannten Teile sind einem Gehäuse 16 angeordnet, das sich hinter einer nur teilweise dargestellten Abdeckung 17 befindet.

Bei einer gleichsinnigen Bewegung der Handgriffe 3a, 3b wird das Seil 6 über das Übertragungselement 14 mitgenommen, so daß dessen Bewegung auf das Übertragungselement 11 und damit letztlich auf den Meßwertgeber 4 übertragen wird. Durch eine Bewegung der Handgriffe 3a, 3b kann also ein Signal für ein Stellglied generiert werden, das auf das Lenkgestänge einwirkt. Das erzeugte Signal ist vorzugsweise proportional zur Relativverschiebung Handgriff zu Gestell. Federn 31 wirken als Mittel zur selbsttätigen Rückstellung der Handgriffe in die gezeigte neutrale Ausgangsstellung.

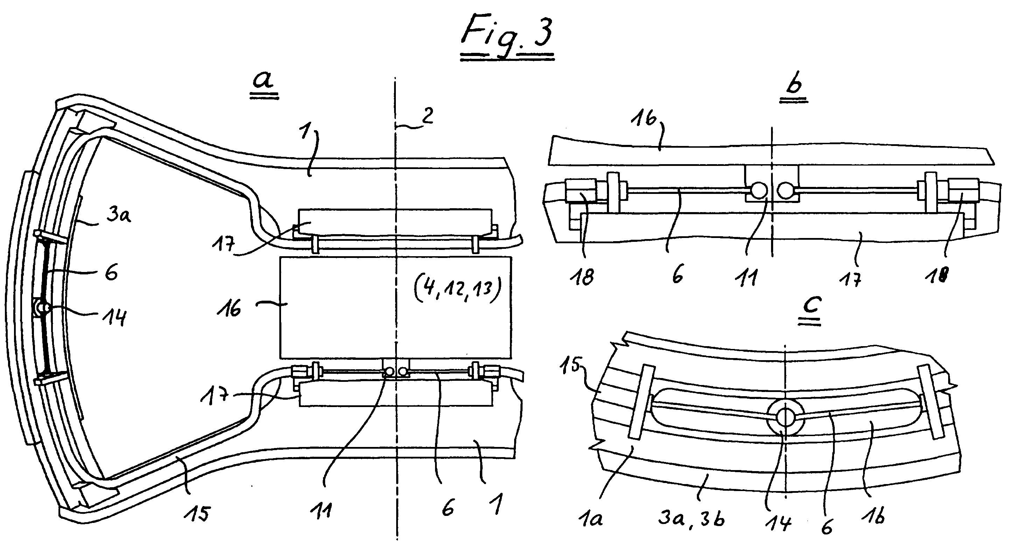

Die zuvor beschriebenen Bauteile sind in den Figuren 3a bis c noch einmal dargestellt, wobei Figur 3a im wesentlichen dem linken Teil von Figur 1 entspricht und sich davon nur darin unterscheidet, daß das Gehäuse 16, in dem sich der Meßwertgeber 4, die Zahnstange 12 und das Zahnrad 13 befinden, hier geschlossen dargestellt ist. Die Figuren 3b und 3c zeigen noch einmal vergrößert die Anbindung des Seiles 6 an die Übertragungselemente 11 und 14 sowie die Ausbildung des Schlitzes 1b in der Führungsleiste 1a. Weitere Erläuterungen zu den Figuren 3a bis c sind nicht erforderlich.

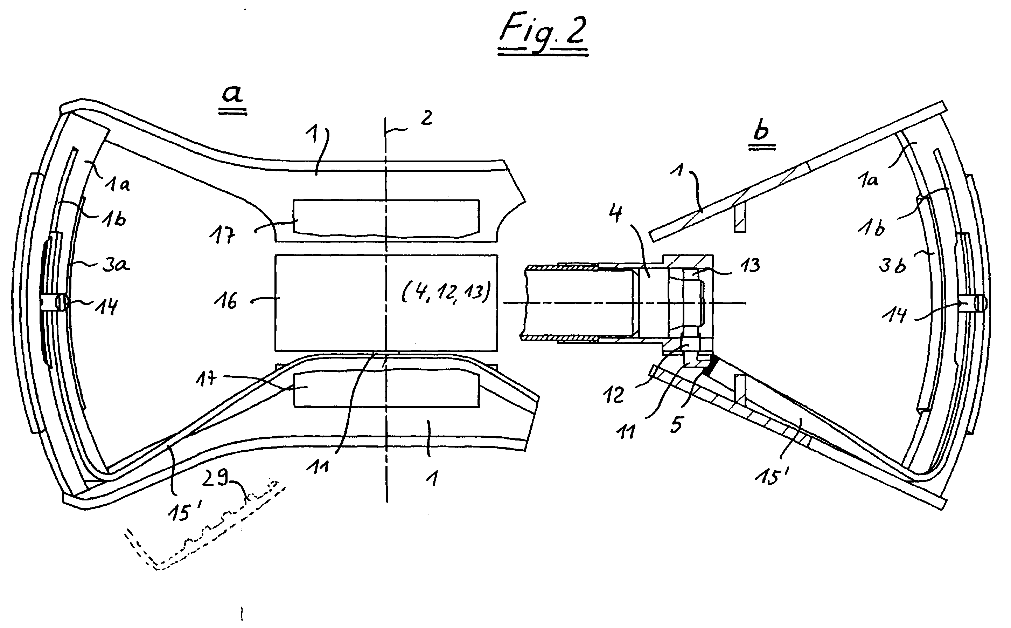

Die Figuren 2a und 2b zeigen eine zweite Ausführungsform des Erfindungsgedankens, die sich von derjenigen gemäß Figur 1 lediglich dadurch unterscheidet, daß anstelle eines Seiles ein Band 5 verwendet wird und daß statt einer Seilführung 15 eine Bandführung 15' vorgesehen ist. Ein weiterer Unterschied ergibt sich daraus, daß die Bandführung 15' anders als die Seilführung 15 nur im unteren Teil des Gestells 1 vorgesehen ist und daß die Übertragungselemente 11 und 14 sowie der Schlitz 1b in der Führungsleiste 1a auf die Querschnittsform des Bandes abgestellt sind. Die Handgriffe 3a und 3b sind wiederum als zwei Halbschalen ausgeführt, von denen in den Figuren 2a und 2b jeweils nur die Unterschale dargestellt ist. Mit 16 ist wiederum das Gehäuse bezeichnet, in dem der Meßwertgeber 4, eine Zahnstange 12 und ein Zahnrad 13 untergebracht sind. Aus der Schnittdarstellung gemäß Figur 2b ergibt sich, wie das Übertragungselement 11 mit dem Band 5 verbunden ist und daß es über die Zahnstange 12 das Zahnrad 13 und damit dem Meßwertgeber 4 bewegt. In Figur 2b ist ein Führungsabschnitt um 90° in die Zeichenebene hineingeklappt dargestellt. Alternativ kann auch ein Zahnriemen 29 anstelle des Bandes 5 verwendet werden, wobei in diesem Fall die Zahnstange 12 entfallen kann.

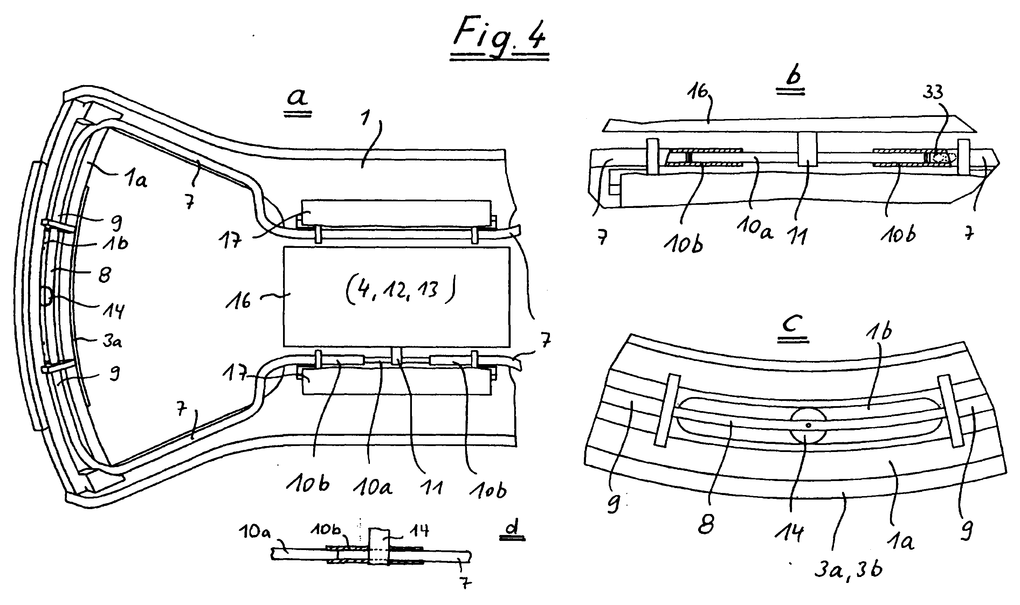

Bei der Ausführungsform gemäß den Figuren 4a bis c ist die mechanische Kopplung der Handgriffe 3a, 3b gemäß den Ausführungsformen der Figuren 1 bis 3 durch eine hydraulische Kopplung ersetzt, die ein im Gestell 1 angeordnetes Kanalsystem 7 mit Kolben-Zylinder-Einheiten 8, 9, 10a, 10b umfaßt. Die Handgriffe 3a, 3b sind in der Führungsleiste 1a des Gestells 1 wie bei den bisher beschriebenen Ausführungsformen um einen Punkt der Symmetrieachse auf einem Kreisbogen verschiebbar angeordnet, durchgreifen mit einem Übertragungselement 14 einen Schlitz 1b in der Führungsleiste 1a und sind mit einem Kolben 8 verbunden, der in den ortsfest im Gehäuse gelagerten Zylinder 9 eingreift und damit eine Verschiebung der darin befindlichen Hydraulikflüssigkeit bewirken kann. Eine zweite Kolben-Zylinder-Einheit 10a, 10b ist mit dem Übertragungselement 11 verbunden, das wie bei den bisherigen beschriebenen Ausführungsformen über eine Zahnstange 12 und ein Zahnrad 13 einen Meßwertgeber 4 verstellt, wobei die letztgenannten Bauteile im Gehäuse 16 in der Darstellung nicht sichtbar untergebracht sind. Mit 17 sind Teile einer Abdeckung bezeichnet, die das Gehäuse 16 überdeckt.

In den Figuren 4b und 4c ist noch einmal die Anbindung der Übertragungselemente 11 und 14 an die Kolben 10a und 8 dargestellt, die mit den Zylindern 10b und 9 zusammenwirken und über das Kanalsystem 7 hydraulisch miteinander gekoppelt sind.

Alternativ kann auch der Kolben 10a ortsfest im Gestell 1 gelagert und der Zylinder 9 mit dem Handgriff gekoppelt sein, wie Figur 4d zeigt. Ferner können anstelle der Hydraulikflüssigkeit auch Kugeln 33, wie in Figur 4b angedeutet, den Kanal 7 ausfüllen und kraftübertragend wirken.

Bei allen dargestellten Ausführungsbeispielen wird die über die Handgriffe 3a, 3b eingeleitete Lenkbewegung auf einen zentral angeordneten Meßwertgeber übertragen, in dem das Ansteuersignal für den Stellantrieb des Lenkgestänges erzeugt wird. Der Erfindungsgedanke ist selbstverständlich nicht auf diese Ausführungsformen beschränkt. Denkbar ist es beispielsweise, daß die Handgriffe 3a, 3b über einen drehbaren Hebel 35, wie er in Fig. 1 angedeutet ist, direkt miteinander mechanisch gekoppelt sind und daß den Handgriffen 3a, 3b jeweils unmittelbar ein Meßwertgeber zugeordnet ist. Dadurch würde eine erfindungsgemäße Lenkvorrichtung geschaffen, die gegen den Ausfall eines Meßwertgebers doppelt gesichert ist. Eine höhere Sicherheit bezüglich der Meßwertgeber kann selbstverständlich aber auch dadurch erreicht werden, daß zwei oder mehr zentral angeordnete Meßwertgeber vorgesehen werden (siehe zweiten Meßwertgeber 4' in Fig. 1), die wie bei den Ausführungsformen der Figuren 1 bis 4 betätigt werden.

## Patentansprüche

1. Vorrichtung zur Erzeugung eines Lenksignals zur Ansteuerung eines Stellantriebs für die Einstellung lenkbarer Räder an Kraftfahrzeugen, insbesondere Personenkraftfahrzeugen, gekennzeichnet durch
- ein nicht drehbares Gestell (1), das eine Symmetrieachse (2) und bogenförmige Führungsabschnitte aufweist,
- ein Paar miteinander gekoppelter Handgriffe (3a, 3b), die an den Führungsabschnitten verschiebbar gleichsinnig gelagert sind und sich längs der Führungsabschnitte und relativ zur Symmetrieachse um ein begrenztes Maß verschieben lassen,
- sowie einen Meßwertgeber (4) zur Generierung eines elektrischen oder elektronischen Signals zur Bestimmung der Lage der Handgriffe (3a, 3b) relativ zum Gestell (1).

2. Vorrichtung nach Anspruch 1, dadurch gekennzeichnet, daß die Handgriffe (3a, 3b) über ein flexibles, im Gestell (1) geführtes Band (5) oder Seil (6) miteinander verbunden sind.

3. Vorrichtung nach Anspruch 2, dadurch gekennzeichnet, daß ein das Band (5) oder das Seil (6) spannendes, elastisches Glied vorgesehen ist.

4. Vorrichtung nach Anspruch 1, dadurch gekennzeichnet, daß die Handgriffe (3a, 3b) über ein Kanalsystem (7) für Hydraulikflüssigkeit miteinander gekoppelt sind.

5. Vorrichtung nach Anspruch 4, dadurch gekennzeichnet, daß jedem der beiden Handgriffe (3a, 3b) eine Kolben-Zylinder-Einheit (8, 9) zugeordnet ist und daß die Stellkräfte über eine Kolben-Zylinder-Einheit (10a, 10b) und ein Übertragungselement (11) auf den Meßwertgeber (4) übertragen werden.

6. Vorrichtung nach Anspruch 5, dadurch gekennzeichnet, daß jeweils ein Kolben mit einem Handgriff (3a, 3b) verbunden ist und daß die Zylinder ortsfest im Gestell (1) gelagert sind.

7. Vorrichtung nach Anspruch 5, dadurch gekennzeichnet, daß jeweils ein Zylinder mit einem Handgriff (3a, 3b) verbunden ist und die Kolben ortsfest im Gestell (1) gelagert sind.

8. Vorrichtung nach Anspruch 1, dadurch gekennzeichnet, daß die Handgriffe (3a, 3b) über einen um einen Punkt der Symmetrieachse drehbaren Hebel starr miteinander verbunden sind.

9. Vorrichtung nach Anspruch 1, dadurch gekennzeichnet, daß die Handgriffe (3a, 3b) über einen im Gestell (1) ausgebildeten Kanal miteinander gekoppelt sind, der mit an den Kanaldurchmesser angepaßten Kugeln gefüllt ist.

10. Vorrichtung nach Anspruch 1, dadurch gekennzeichnet, daß die Handgriffe (3a, 3b) an beiden Enden mit je einem Zahnriemen verbunden sind und daß die Zahnriemen im Gestell (1) geführt und über ein Zahnrad miteinander gekoppelt sind.

11. Vorrichtung nach einem der Ansprüche 1 bis 10, dadurch gekennzeichnet, daß Mittel zur selbsttatigen Rückstellung der Handgriffe (3a, 3b) in die neutrale Ausgangsstellung vorgesehen sind.

12. Vorrichtung nach einem der Ansprüche 1 bis 11, dadurch gekennzeichnet, daß zwei oder mehr voneinander unabhängige Meßwertgeber (4) vorgesehen sind.

13. Vorrichtung nach einem der vorhergehenden Ansprüche, dadurch gekennzeichnet, daß der Meßwertgeber (4) ein Signal erzeugt, das der Relativverschiebung zwischen Handgriffen (3a, 3b) und Gestell (1) proportional ist.

14. Vorrichtung nach einem der vorhergehenden Ansprüche, dadurch gekennzeichnet, daß das Gestell (1) analog zum herkömmlichen Lenkrad im Fahrzeug angewendet ist.
